# EUROPÄISCHE PATENTSCHRIFT

(11) **EP 1 336 524 B1**
(45) Veröffentlichungstag und Bekanntmachung des Hinweises auf die Patenterteilung: **02.04.2008**
(21) Anmeldenummer: 03001142.3
(22) Anmeldetag: 21.01.2003
(51) Int. Cl.: B60K 11/04

(54) **Kühleranordnung für Traktoren**
Raditor arrangement for tractors
Disposition de radiateurs pour tracteurs

(30) Priorität: 16.02.2002 DE 10206551
(43) Veröffentlichungstag der Anmeldung: 20.08.2003
(73) Patentinhaber: CNH Österreich GmbH, 4300 St. Valentin (AT)
(72) Erfinder: Pfusterschmid, Johann, Dipl.-Ing., 4432 Ernsthofen (AT); Haller, Robert, Dipl.-Ing., 4432 Ernsthofen (AT)
(74) Vertreter: Feldkamp, Rainer

(56) Entgegenhaltungen:
- EP-A- 0 952 024
- DE-A1- 4 122 512
- DE-A1- 19 547 348
- DE-A1- 19 925 440
- GB-A- 1 151 922
- US-A- 5 386 873
- US-A- 5 492 167

## Beschreibung

Die Erfindung betrifft eine Kühleranordnung für Traktoren nach den Merkmalen im Oberbegriff des Patentanspruchs 1.

Die Kühleranordnung in leistungsstarken Traktoren ist in deren Fahrtrichtung gesehen heute meistens so gestaltet, daß sich vor dem Wasserkühler der Ölkühler und unmittelbar vor diesem der Ladeluftkühler befindet, wenn der Kühlventilator hinter dem Wasserkühler angeordnet ist. Deren Lufteintritts- und -austrittsflächen sind gleich groß, so daß der Kühlventilator einen , gleichmäßigen Kühlluftstrom durch alle Kühler in der genannten Reihenfolge saugt. Der so aufgebaute Kühlerblock befindet sich bei Traktoren hinter der Lufteinlaßöffnung der Kühlerhaube, die zum Zwecke von Wartungs- und Instandsetzungsarbeiten hochschwenkbar ist. Da sich landwirtschaftliche Arbeitsgeräte bekanntlich häufig in einer Umgebung mit erheblicher Luftverschmutzung befinden, müssen deren Kühler von Zeit zu Zeit gereinigt werden. Das erfolgt üblicherweise durch Durchblasen von Luft oder einer Flüssigkeit gegen die Durchströmrichtung der Kühlluft bei normalem Betrieb. Dazu müssen die Kühler möglichst so weit voneinander entfernt werden, daß diese von hinten zugänglich sind. Das ist aber bei landwirtschaftlichen Arbeitsgeräten nicht so leicht zu verwirklichen, weil der dafür erforderliche Bauraum durch deren Räder und den Rahmen sowie durch das vordere Hubwerk und eventuell notwendige Balastgewichte stark eingeschränkt ist, so daß immer ein Teil der zu reinigenden Fläche unzugänglich bleibt. Eine Ausführungsvariante einer Kühleranordnung in Traktoren mit einer Möglichkeit zur Reinigung besteht aus einem Ladelüftkühler, einem Klimakühler, einem Ölkühler und einem Wasserkühler, die in der Durchströmungsrichtung der Kühlluft gesehen in dieser Reihenfolge angeordnet sind. Der Ladeluftkühler und der Wasserkühler sind hierbei fest am Rahmen des Traktors angebracht und von den übrigen zwei wenigstens einer davon seitlich herausziehbar eingebaut. Nachteilig an dieser Kühleranordnung ist, daß der Ausbau genannter Kühler relativ zeitaufwendig ist. Durch die Aufnahme dieser Kühler in Führungen zum gerichteten seitlichen Herausziehen ist dieser Vorgang auch kraftaufwendig, weil diese Führungen mit der Zeit stark verschmutzen. Außerdem können die Kühler nicht richtig gereinigt werden, weil zum vollständigen seitlichen Herausziehen der Bauraum einfach nicht vorhanden ist.
Eine zweite Ausführungsvariante einer Kühleranordnung an einem Traktor hat die deutsche Firma "Fendt" auf der "Agritechnika 2001" ausgestellt, die in der Durchströmungsrichtung der Kühlluft gesehen in der Reihenfolge aus einem Ölkühler, einem Ladeluftkühler und einem Wasserkühler besteht. Der Ölkühler ist hier in Fahrtrichtung gesehen vorn am Rahmen des Ladeluftkühlers angebracht, wobei er um eine seitlich am Rahmen des Ladeluftkühlers befestigte und vertikal ausgerichtete Achse um etwa 90 Grad nach vorn und damit vom Ladeluftkühler wegschwenkbar aufgehängt ist. Der als nach vorn offenes Gehäuse ausgebildete Ladeluftkühler ist dem Wasserkühler direkt vorgeordnet. Er ist mit seinen beiden starr an ihm befestigten und Ladeluft führenden Rohrstücken oben am Rahmen des Traktors in Schwenkpunkten aufgenommen, so daß er in einem spitzen Winkel so gegenüber dem Wasserkühler angestellt werden kann, daß sich zwischen ihm und dem Wasserkühler ein sich von oben nach unten erweiternder Spalt ergibt. In dieser Stellung wird der sich gegenüber den Ladeluft führenden und am Motor befestigten Rohrstücken und den vorstehend erwähnten Rohrstücken am Ladeluftkühler verändernde Schwenkwinkel mittels flexibler Schlauchstücke ausgeglichen.

An dieser Kühleranordnung ist von Nachteil, dass durch den genannten schmalen Spalt der Ladeluftkühler von unten nach oben gesehen immer schlechter gereinigt werden kann, so dass er die maximale Kühlleistung nicht erreicht. Außerdem ist es bei dieser Kühleranordnung unmöglich, noch einen vierten Kühler so anzubringen, dass auch der für eine notwendige Reinigung gut zugänglich wäre.

Aus der DE 195 47 348 A1 ist eine Kühleranordnung bekannt, die in einer Seitenwand eines Feldhäckslers angeordnet ist, wobei der mittlere und der vordere Kühler um im Wesentlichen vertikale Achsen herausschwenkbar sind. Ein derartiges Herausschwenken ist bei einer vor dem Motor eines Traktors angeordneten Kühleranordnung nicht möglich.

Aus der DE 41 22 512 A1 ist weiterhin eine Kühleranordnung der im Oberbegriff des Anspruchs 1 genannten Art bekannt, bei der der mittlere Kühler nach der Entfernung des vorderen Kühlers nach oben und dabei nach vorn bewegbar aufgehängt ist, um seine Flächen und die Vorderfläche des hinteren Kühlers zugänglich zu machen. Hierzu ist es jedoch erforderlich, den vorderen Kühler zu entfernen.

Der Erfindung die Aufgabe zugrunde, eine Kühleranordnung für Traktoren zu schaffen, bei der eine gute Zugänglichkeit von wenigstens drei in einer Reihe hintereinander angeordneter Kühler zum Zwecke ihrer Reinigung gewährleistet ist, wobei die Vorbereitungs- und Nachbereitungsarbeiten einschließlich des Reinigungsvorganges selbst nur einen geringen Zeitaufwand erfordern und wobei insgesamt nur eine geringe körperliche Anstrengung aufzubringen ist.

Diese Aufgabe wird gemäß der Erfindung durch die Merkmale des Patentanspruchs 1 gelöst, wobei in den Unteransprüchen Merkmale aufgeführt sind, die diese Lösung in vorteilhafter Weise weiterentwickeln.

Bei der erfindungsgemäßen Kühleranordnung ist der vordere Kühler so weit nach oben und nach vom bewegbar aufgehängt, dass der mittlere Kühler ungehindert um etwa einen rechten Winkel seitlich vom hinteren Kühler verschwenkbar ist.

Hierbei wird der vordere Kühler soweit nach oben bewegt, dass er die Lufteintrittsfläche und den Rahmen des mittleren Kühlers völlig freigibt. Das ist unproblematisch möglich, da dort entsprechender Bauraum zur Verfügung steht. In der obersten Stellung des vorderen Kühlers kann dann der mittlere Kühler ungehindert vom hinteren Kühler um einen rechten Winkel nach der Seite weggeschwenkt werden, wofür auch der dazu notwendige Bauraum vorhanden ist. In diesen Kühlerpositionen sind alle drei Kühler so weit voneinander entfernt, dass deren völlige Reinigung gewährleistet ist.

Zur Bewegung des vorderen Kühlers nach oben und ein Stück nach vorn wird vorzugsweise ein Schwenkmechanismus eingesetzt, der eine in Fahrtrichtung des Traktors zeigende Schwinge aufweist. Deren vorderes Ende ist starr am Oberteil des vorderen Kühlers befestigt und sie erstreckt sich in einer im Wesentlichen horizontalen Ausrichtung nach hinten, wo sie mit ihrem hinteren Ende in einer Schwenkachse gelenkig aufgenommen ist. Diese Schwenkachse ist an einer ortsfest im Traktor befestigten Konsole angebracht, wofür sich dessen Rahmen oder auch sein Motor anbieten. Damit sich der vordere Kühler beim Hochschwenken vom mittleren Kühler leicht löst, liegt die Schwenkachse im nicht verschwenkten Zustand der Schwinge ein kleines Stück über dessen Oberteil, damit er sich neben dem Hochschwenken auch ein Stück von diesem nach vorn abhebt. Die Länge der Schwinge sollte weder zu kurz noch zu lang sein. Eine optimale Länge liegt vor, wenn sie etwa so lang wie der vordere Kühler hoch ist.
In Weiterbildung der Erfindung ist nach den Merkmalen des Unteranspruchs 5 zwischen der Konsole und der Schwinge eine Gasfeder gelenkig angeordnet, die das Hochschwenken des vorderen Kühlers maßgeblich unterstützt und das Herabschwenken abfedert.
In einer weiteren Ausführungsvariante der Erfindung nach den Merkmalen im des Unteranspruchs 6 hat es sich bewährt, die beiden Ladeluft führenden und starr am vorderen Kühler befestigten Rohrstücken sowie auch die am Abgasturbolader und am Luftansaugkanal des Motors starr befestigten Ladeluft führenden Rohrstücke in einem gewissen Abstand vor der Schwenkachse enden zu lassen und die beiden Enden mit je einem flexiblen Schlauchstück an dieser Stelle zu verbinden, weil es dadurch nur zu veränderten Biegewinkel der flexiblen Schlauchstücke und nicht noch zu einer zusätzlichen Längenänderung kommt.
Zusammenfassend stellen sich damit die Vorteile der Erfindung so dar, daß mit dieser Kühleranordnung eine gute Zugängigkeit zu allen Kühlern zum Zwecke ihrer vollständigen Reinigung gewährleistet ist, was sogar beim Vorhandensein von vier in einer Reihe hintereinander angeordneten Kühlern umsetzbar ist. Die Vorbereitungs- und Nachbereitungsarbeiten einschließlich des Reinigungsvorganges selbst sind in kurzer Zeit und nur mit geringen körperlichen Anstrengungen zu erledigen.

Die Erfindung soll nun anhand eines Ausführungsbeispieles näher erläutert werden, wobei die einzelnen Figuren zeigen:
- Fig. 1:: eine schematische Seitenansicht auf das Vorderteil eines Traktors von rechts mit der Kühleranordnung in der Betriebsstellung
- Fig. 2:: eine Ansicht wie Fig. 1 mit halb hoch geschwenktem vorderen Kühler
- Fig. 3:: eine Ansicht wie Fig. 1 mit ganz hoch geschwenktem vorderen Kühler
- Fig. 4:: eine Seitenansicht wie Fig. 1 und zusätzlich ausgeschwenktem mittleren Kühler
- Fig. 5:: eine Seitenansicht wie in Fig. 4 von der in Fahrtrichtung gesehenen linken Seite
- Fig. 6:: eine Draufsicht von Figur 5
- Fig. 7:: eine Vorderansicht von den Figuren 5 und 6

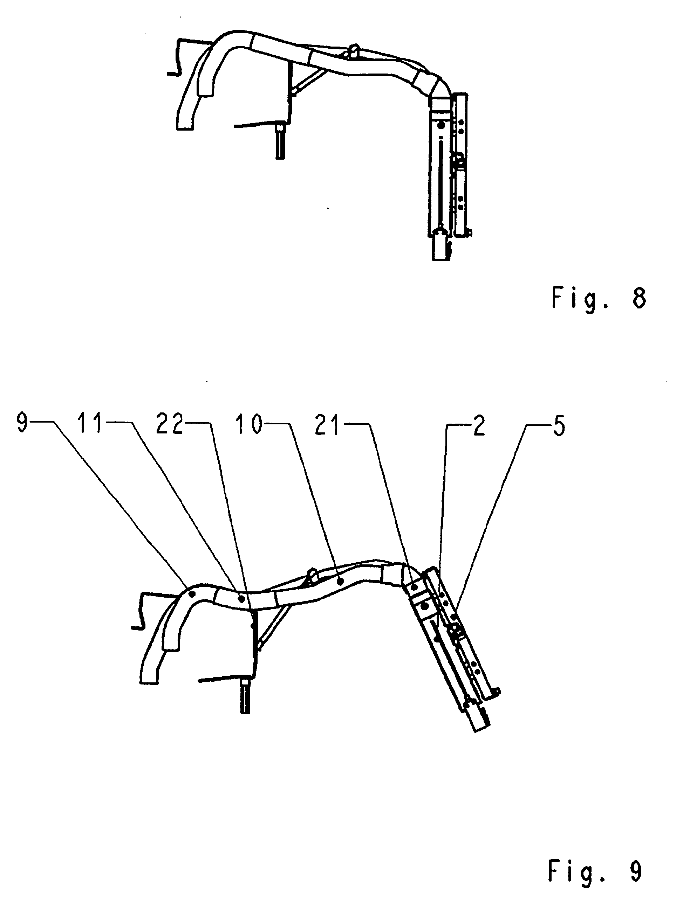

- Fig. 8:: eine Einzelheit des vorderen Kühlers in der Betriebsstellung mit Schwenkmechanismus und den Ladeluft führenden Rohrstücken
- Fig. 9:: eine Einzelheit wie Figur 8 mit etwas hoch geschwenktem vorderen Kühler

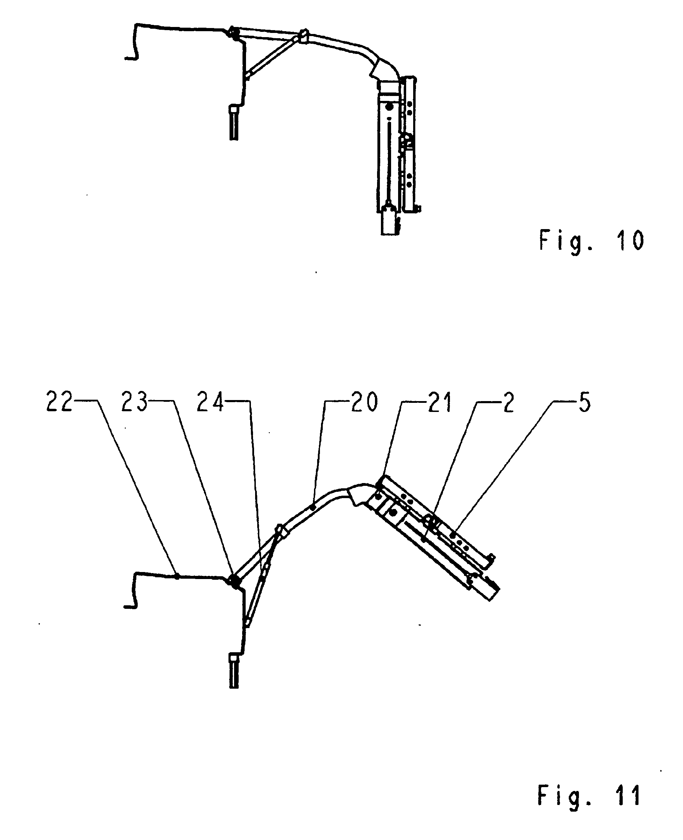

- Fig. 10:: eine Einzelheit wie Figur 8 nur mit dem Schwenkmechanismus
- Fig. 11:: eine Einzelheit wie Figur 9 nur mit dem Schwenkmechanismus
- Fig. 12:: eine Einzelheit wie Figur 10 mit nach vorn aufgeklapptem Klimakühler
- Fig. 13:: eine Draufsicht von Figur 12.

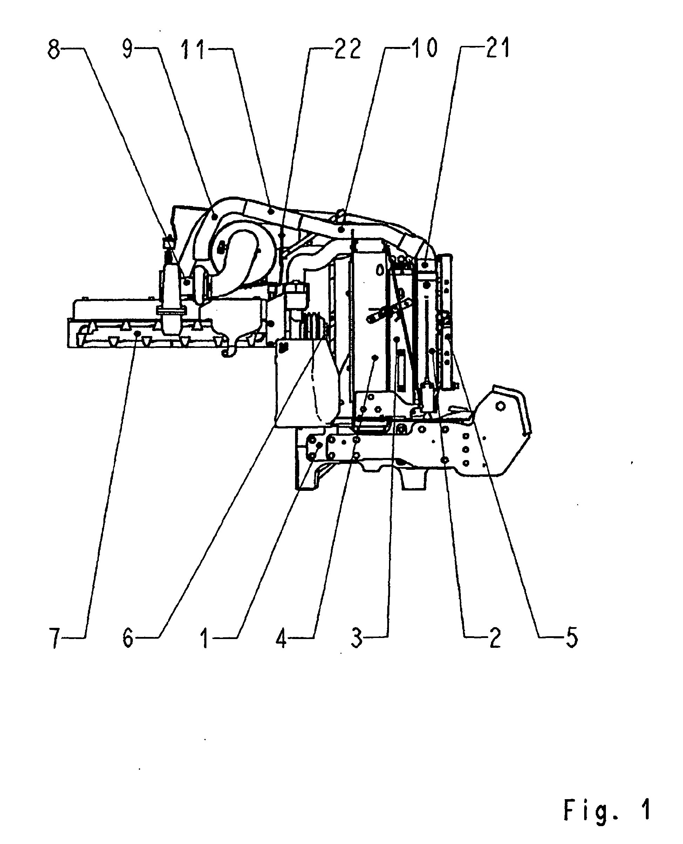

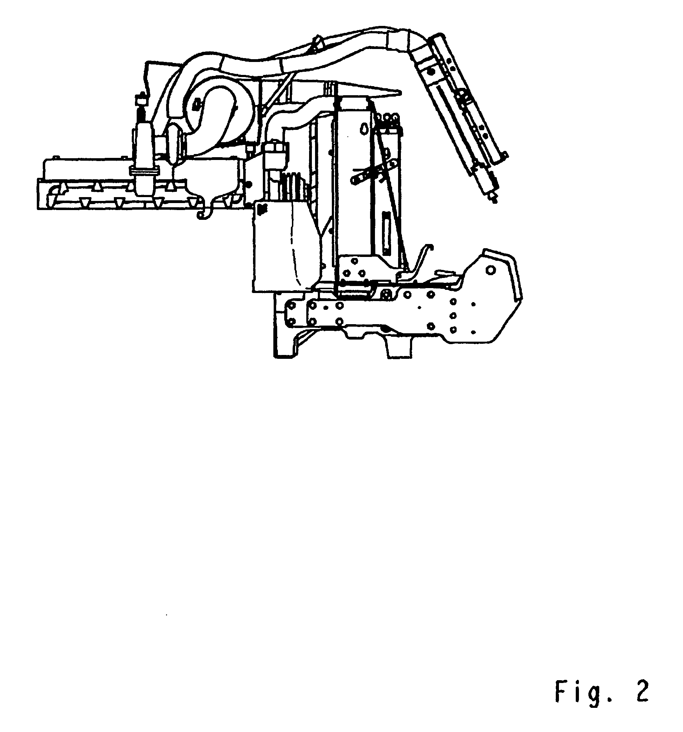

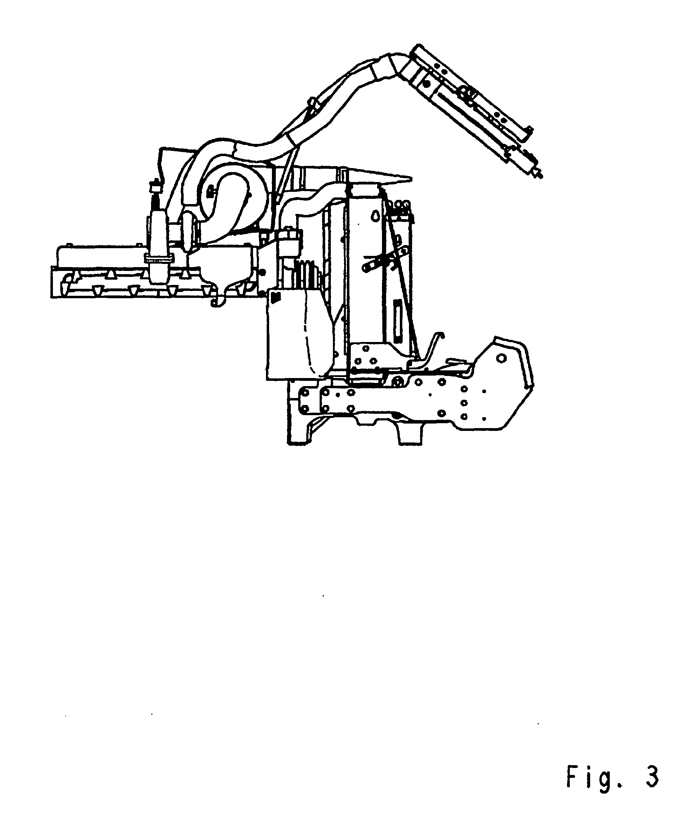

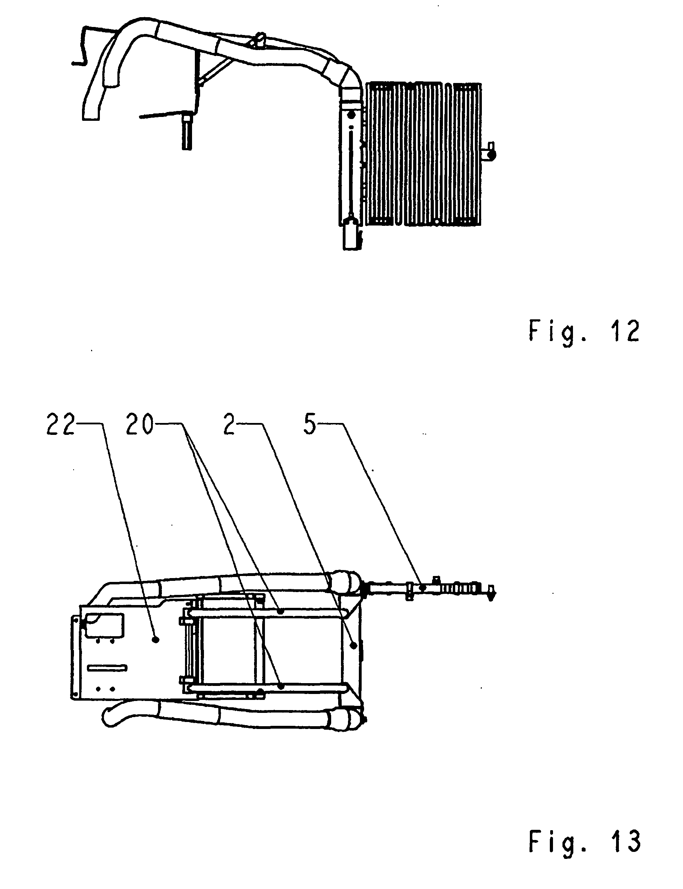

In Figur 1 ist eine schematische Seitenansicht auf einen Traktor von der in Fahrtrichtung gesehenen rechten Seite gezeigt. Auf dessen Rahmen 1 ist die Kühleranordnung aufgebaut, die hier aus einem als Ladeluftkühler ausgebildeten vorderen Kühler 2, einem als Ölkühler ausgebildeten mittleren Kühler 3 und einem als Wasserkühler ausgebildeten hinteren Kühler 4 besieht. Am vorderen Kühler 2 ist darüber hinaus noch ein schmaler Klimakühler 5 so schwenkbeweglich befestigt, daß er entweder um eine vertikale Achse seitlich nach links oder rechts nach den Figuren 12 und 13 bzw. um eine horizontale Achse nach oben oder unten von diesem wegschwenkbar ist. Hinter dem Wasserkühler befindet sich der einen gleichmäßigen Luftstrom durch alle Kühler 2, 3, 4 und 5 saugende Kühlventilator 6, der in bekannter Weise vom Motor 7 des Traktors angetrieben wird. Von dieser Seite ist auch der Abgasturbolader 8 zu sehen, an dem ein nach oben und vorn ragendes Ladeluft führendes Rohrstück 9 starr befestigt ist, das mit dem starr am Ladeluftkühler befestigten und Ladeluft führenden Rohrstück 10 durch ein flexibles Schlauchstück 11 verbunden ist.
Die nachfolgenden Figuren 2 und 3 zeigen das Hochschwenken des Ladeluftkühlers über eine mittlere bis zur obersten Position, was mit einem später zu erläuternden Schwenkmechanismus 12 realisiert wird.

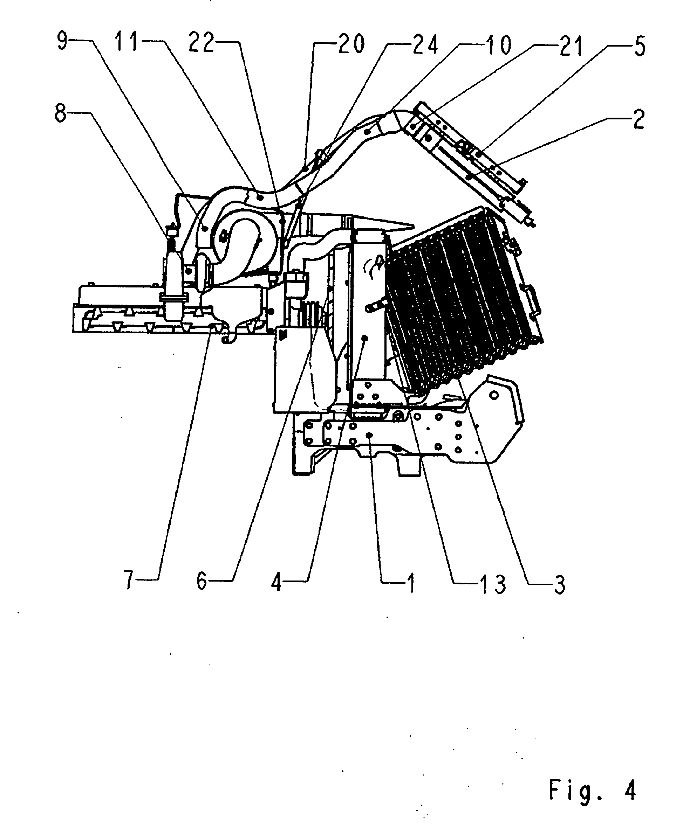

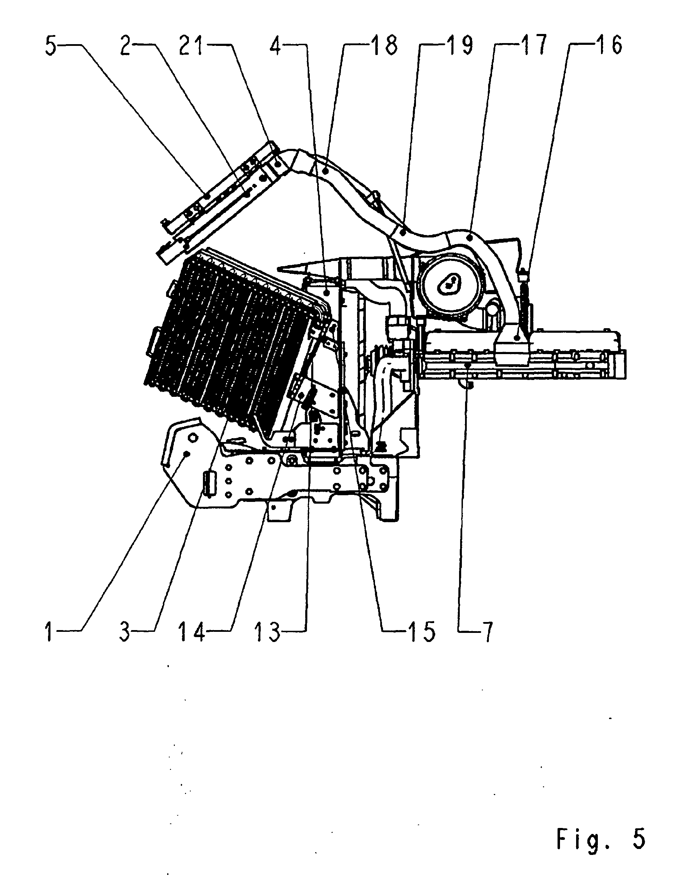

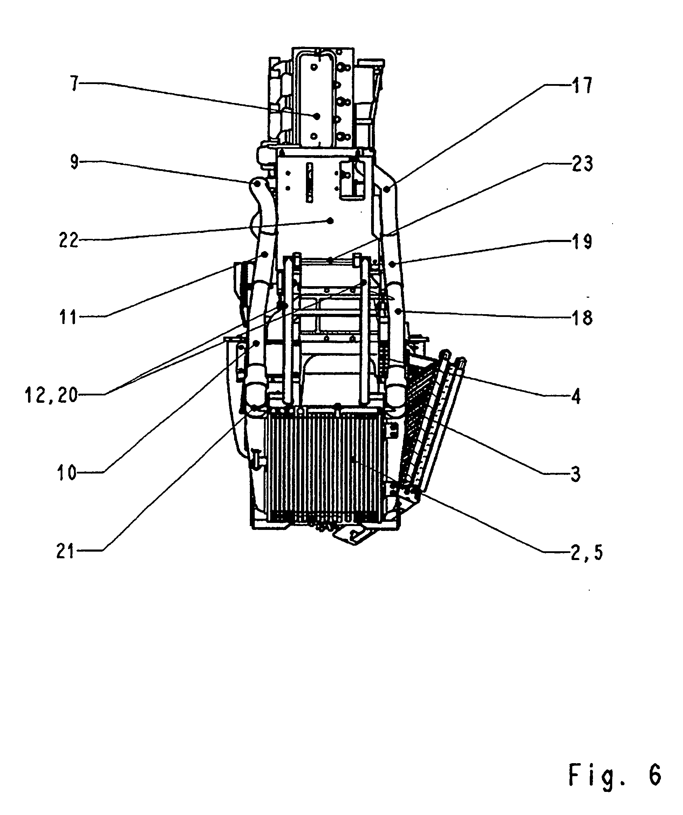

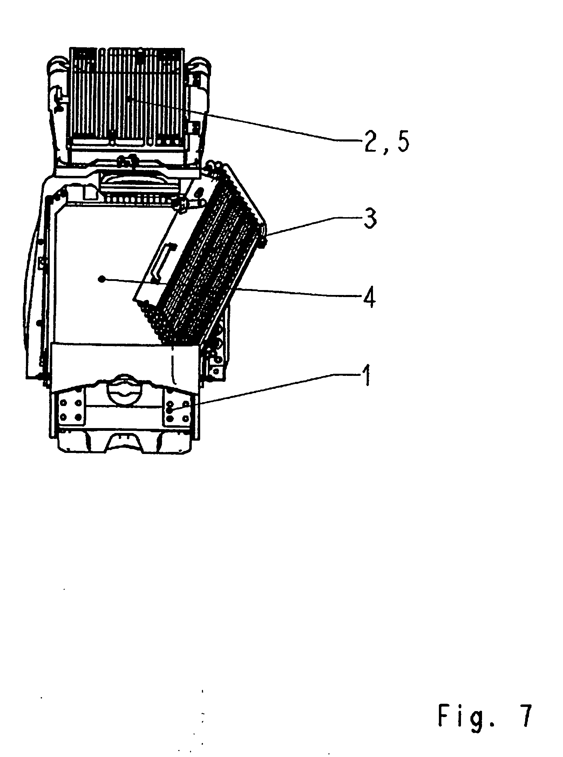

In den Figuren 4 bis 7 ist bei hochgeschwenktem Ladeluftkühler der um 90 Grad vom Wasserkühler weg nach vorn geschwenkte Ölkühler gezeigt, der um eine am Wasserkühler befestigte Scharnierachse 13 angelenkt ist, die in einem vorwärts- abwärts geneigten spitzen Winkel gegenüber einer gedachten Vertikalen im Raum steht. Erreicht wird das nach Figur 5 relativ einfach durch unterschiedlich lange Scharniere 14 und 15. Die gleiche Figur zeigt analog wie auf der rechten Seite das starr am Luftansaugkanal 16 befestigte und Ladeluft führende Rohrstück 17, das mit dem starr am Ladeluftkühler befestigten und Ladeluft führenden Rohrstück 18 auch auf dieser Seite mit einem flexiblen Schlauchstück 19 verbunden ist.
Der vorstehend bereits erwähnte Schwenkmechanismus 12 für den Ladeluftkühler besteht einmal aus einer in Fahrtrichtung des Traktors zeigenden und wenigstens die vertikale Länge des Ladeluftkühlers aufweisenden Schwinge 20. Mit ihrem vorderen Ende ist sie starr am Oberteil 21 des Ladeluftkühlers angebracht und erstreckt sich von da aus in einer annähernd horizontalen Ausrichtung nach hinten bis zu einer ortsfest am Rahmen 1 oder am Motor 7 befestigten Konsole 22. Dort ist die Schwinge 20 in einer Schwenkachse 23 aufgenommen, die sich wenigstens in der gleichen Höhe wie das Oberteil 21 des Ladeluftkühlers befindet. Schließlich gehört zum Schwenkmechanismus 12 noch eine Gasfeder 24, die einenends mit der Konsole 22 und anderenends mit der Schwinge 20 gelenkig verbunden ist. Zur Lage der flexiblen Schlauchstücken 11 und 19 ist noch bedeutsam, daß diese von der Seite betrachtet mit ihrer Mitte zur Schwenkachse 23 deckungsgleich sind.

### Bezugszeichenaufstellung

- 1: Rahmen
- 2: vorderer Kühler
- 3: mittlerer Kühler
- 4: hinterer Kühler
- 5: Klimakühler
- 6: Kühlventilator
- 7: Motor
- 8: Abgasturbolader
- 9: Rohrstück
- 10: Rohrstück
- 11: flexibles Schlauchstück
- 12: Schwenkmechanismus
- 13: Scharnierachse
- 14: Scharnier
- 15: Scharnier
- 16: Luftansaugkanal
- 17: Rohrstück
- 18: Rohrstück
- 19: flexibles Schlauchstück
- 20: Schwinge
- 21: Oberteil
- 22: Konsole
- 23: Schwenkachse
- 24: Gasfeder

## Patentansprüche

1. Kühleranordnung für Traktoren, bestehend aus in Fahrtrichtung gesehen wenigstens einem vorderen Kühler (2), einem mittleren Kühler (3) und einem hinteren Kühler (4), von denen der hintere Kühler (4) ortsfest am Rahmen (1) des Traktors befestigt ist und der mittlere Kühler (3) vom hinteren Kühler (4) sowie auch der vordere Kühler (2) vom mittleren Kühler (3) voneinander weg bewegbar und dabei zumindest zwischen diesen einen Spalt öffnend angeordnet sind, wobei zumindest einer der Kühler (2, 3, 4) nach oben hin verschwenkbar ist,
**dadurch gekennzeichnet, dass** der vordere Kühler (2) so weit nach oben und dabei nach vorn bewegbar aufgehängt ist, dass der mittlere Kühler (3) ungehindert um etwa einen rechten Winkel seitlich vom hinteren Kühler (4) verschwenkbar ist.

2. Kühleranordnung nach Anspruch 1, **dadurch gekennzeichnet, dass** der vordere Kühler (2) ein Ladeluftkühler, der mittlere Kühler (3) ein Ölkühler und der hintere Kühler (4) ein Wasserkühler ist.

3. Kühleranordnung nach dem Anspruch 2, **dadurch gekennzeichnet, dass** am vorderen Kühler (2) ein Klimakühler (5) so schwenkbeweglich angebracht ist, dass er entweder um eine vertikale Achse seitlich nach links oder rechts oder um eine horizontale Achse nach oben oder unten von diesem wegschwenkbar ist.

4. Kühleranordnung nach den Ansprüchen 1 bis 3, **dadurch gekennzeichnet, dass** der vordere Kühler (2) mit einem Schwenkmechanismus (12) verbunden ist, bestehend aus einer in Fahrtrichtung des Traktors zeigenden und wenigstens die vertikale Länge des vorderen Kühlers (2) aufweisenden Schwinge (20), deren vorderes Ende starr am Oberteil (21) des vorderen Kühlers (2) angebracht ist, die sich von da aus in einer horizontalen Ausrichtung nach hinten bis zu einer sich ortsfest in dem Traktor befindenden Konsole (22) erstreckt, an der sie mit ihrem hinteren Ende in einer Schwenkachse (23) aufgenommen ist, die sich im nicht verschwenkten Zustand der Schwinge (20) wenigstens auf der gleichen Höhe wie das Oberteil (21) des vorderen Kühlers (2) befindet.

5. Kühleranordnung nach einem der Ansprüche 1 bis 3, **dadurch gekennzeichnet, dass** an der Konsole (22) ein Ende einer Gasfeder (24) gelenkig befestigt ist, deren anderes Ende mit der Schwinge (20) gelenkig verbunden ist.

6. Kühleranordnung nach den Ansprüchen 1 bis 4, **dadurch gekennzeichnet, dass** die beiden Ladeluft führenden und starr am vorderen Kühler (2) befestigten Rohrstücke (10;18) sowie auch die am Abgasturbolader (8) und am Luftansaugkanal (16) des Motors (7) starr befestigten Ladeluft führenden Rohrstücke (9;17) in einem Abstand vor der Schwenkachse (23) an der Konsole (22) enden und dort mit einem flexiblen Schlauchstück (11; 19) miteinander verbunden sind.

## Claims

1. A cooler arrangement for tractors, consisting of, viewed in the direction of travel, at least a front cooler (2), a central cooler (3) and a rear cooler (4), of which the rear cooler (4) is attached at a fixed position on the frame (1) of the tractor and the central cooler (3) can be moved away from the rear cooler (4) and also the front cooler ((2) can be moved away from the central cooler (3) and at the same time an opening gap is arranged between them, whereby at least one of the coolers (2, 3, 4) can pivot pivot upwards
**characterised in that** the front cooler (2) is suspended so that is can move so far upwards and if necessary also forwards, that the central cooler (3) can be swung away from the rear cooler (4) unhindered to the side by about a right angle.

2. A cooler arrangement in accordance with claim 1, **characterised in that** the front cooler (2) is a inlet intercooler, the central cooler (3) is an oil cooler, and the rear cooler (4) is a water cooler.

3. A cooler arrangement in accordance with claim 2, **characterised in that** on the front cooler (2) an air-conditioning cooler (5) is attached pivoted, so that it can be swung either laterally to the left of to the right about a vertical axis or upwards or downwards about a horizontal axis.

4. A cooler arrangement in accordance with claims 1 to 3, **characterised in that** the front cooler (2) is joined to a tilting mechanism (12), consisting of a lever arm (20) pointing in the direction of travel of the tractor and having at least the vertical length of the front cooler (2), the front end of the lever arm is attached rigidly to the upper part of the front cooler (2), which extends from there in an approximately horizontal direction towards the rear up to a console (22) situated at a fixed position on the tractor, into which it is included with its rear end in a pivoting axle (23) which in the non-tilted position of the lever arm (20) is situated at the same height at least as the upper part (21) of the front cooler (2).

5. A cooler arrangement in accordance with any of the claim 1 to 3, **characterised in that**, on the console (22) at one end a gas spring (24) is flexibly attached, the other end of which articulates with the lever arm (20).

6. A cooler arrangement in accordance with claims 1 to 4 **characterised in that** the two pipes (10; 18) carrying charger air and rigidly attached to the front cooler (2) and also the two pipes (9; 17) carrying charger air and rigidly attached to the exhaust gas turbocharger (8) and to the air induction channel (16) of the engine (7) end at the console (22) at a certain distance in front of the pivoting axle (23) and are joined to each other there with a flexible hose piece (11; 19).

## Revendications

1. Dispositif de refroidissement pour tracteurs comprenant, considéré dans le sens de déplacement, au moins un radiateur avant (2), un radiateur central (3) et un radiateur arrière (4), le radiateur arrière (4) étant fixé dans une position fixe au châssis (1) du tracteur, le radiateur central (3) pouvant être éloigné du radiateur arrière (4) et le radiateur avant (2) pouvant être éloigné du radiateur central (3), une ouverture étant en même temps agencée entre eux et au moins l'un des radiateurs étant basculable vers le haut, **caractérisé en ce que** le radiateur avant (2) est suspendu de manière à pouvoir se déplacer suffisamment vers le haut, et si nécessaire aussi vers l'avant, pour que le radiateur central (3) puisse être éloigné sans entrave du radiateur arrière (4) par basculement latéralement selon un angle plus ou moins droit.

2. Dispositif de refroidissement suivant la revendication 1, **caractérisé en ce que** le radiateur avant (2) est un radiateur intermédiaire d'entrée, le radiateur central est un radiateur d'huile et le radiateur arrière (4) est un radiateur d'eau.

3. Dispositif de refroidissement suivant la revendication 2, **caractérisé en ce que**, sur le radiateur avant (2), un radiateur de climatisation (5) est fixé à pivotement, de manière à pouvoir être basculé soit latéralement à gauche ou à droite autour d'un axe vertical, soit vers le haut ou vers le bas autour d'un axe horizontal.

4. Dispositif de refroidissement suivant les revendications 1 à 3, **caractérisé en ce que** le radiateur avant (2) est relié à un mécanisme de basculement (12), constitué d'un bras de levier (20) indiquant le sens de déplacement du tracteur et d'au moins la longueur verticale du radiateur avant (2), l'extrémité avant du bras de levier étant fixée de manière rigide à la partie supérieure du radiateur avant (2), qui s'étend de là, dans une direction approximativement horizontale, vers l'arrière jusqu'à une console (22) située dans une position fixe sur le tracteur, dans lequel elle est comprise, son extrémité arrière étant prise dans un axe de pivotement (23) qui, dans l'état non pivoté du bras de levier, est situé au moins à la même hauteur que la partie supérieure (21) du radiateur avant (2).

5. Dispositif de refroidissement suivant l'une quelconque des revendications 1 à 3, **caractérisé en ce qu'**un ressort à gaz comprimé (24) est fixé de manière flexible à la console, à l'une de ses extrémités, l'autre extrémité s'articulant sur le bras de levier (20).

6. Dispositif de refroidissement suivant les revendications 1 à 4, **caractérisé en ce que** les deux tuyaux (10, 18) transportant l'air du turbocompresseur et fixés de manière rigide au radiateur avant (2) ainsi que les deux tuyaux (9, 17) transportant l'air du turbocompresseur et fixés de manière rigide au turbocompresseur à gaz d'échappement (8) et au canal d'induction d'air (16) du moteur (7) se terminent au niveau de la console (22) à une certaine distance devant l'axe de pivotement (23) et sont reliés l'un à l'autre au moyen d'un élément de flexible (11, 19).
